# EUROPEAN PATENT SPECIFICATION

(11) **EP 4 076 782 B1**
(45) Date of publication and mention of the grant of the patent: **18.06.2025**
(21) Application number: 20848720.7
(22) Date of filing: 15.12.2020
(51) Int. Cl.: B21D 26/021, B21D 47/01, B21D 26/059, E21D 15/02, E04C 3/00, E04C 3/32, E04G 11/04, E04G 13/02

(54) **A MULTICHAMBER STRUCTURAL ELEMENT AND A MULTICHAMBER STRUCTURAL ELEMENT MANUFACTURING METHOD**
MEHRKAMMER-BAUELEMENT UND VERFAHREN ZUR HERSTELLUNG EINES MEHRKAMMER-BAUELEMENTS
ÉLÉMENT STRUCTURAL À CHAMBRES MULTIPLES ET PROCÉDÉ DE FABRICATION D'ÉLÉMENT STRUCTURAL À CHAMBRES MULTIPLES

(30) Priority: 18.12.2019 PL 43227819
(43) Date of publication of application: 26.10.2022
(73) Proprietor: Instytut Formy Sp. z.o.o., 51-610 Wroclaw (PL)
(72) Inventor: ZIETA, Oskar, 51-610 Wroclaw (PL)
(74) Representative: Ptasinski, Konrad Witold
(86) International application number: PCT/IB2020/061954
(87) International publication number: WO 2021/124093

(56) References cited:
- EP-A1- 2 110 189
- WO-A1-2012/159856
- GB-A- 1 033 890

## Description

The object of the present invention is a multichamber structural element, used in particular as vertical post-type load-bearing structures, and a multichamber structural element manufacturing method. The objects of the invention are applied in the construction, mining or energy industries for manufacturing vertical load-bearing structures.

One of the most important structural elements used in numerous technical fields are pillars being vertical, freestanding structural supports. As posts and columns, they are used in supporting and bearing the weight of the structure of a building, bridge, viaduct etc. Load-bearing structural elements are also used in mining, as roof supports in excavations, or in street furniture, for example in the construction of pergolas.

Polish patent PL224768B1 discloses a mining load-bearing post comprising: longitudinal layers, each comprising a pair of outer beams, substantially parallel to each other, which define two longitudinal post walls, and transverse layers, each comprising a pair of outer beams, substantially parallel to each other, which define two transverse post walls, wherein the transverse layers are arranged interchangeably with the longitudinal layers so that the outer beams of the transverse layers intersect with the adjacent outer beams of the longitudinal layers in four intersection points and are connected thereto via notches made in the upper and lower surfaces of the longitudinal beams and of the transverse beams. Structures of this type are used in underground mining as protective elements, roof supporting elements or strutting elements between the floor and the roof in mining excavations. The load-bearing capability of the post is increased by filling its inner space with a self-curing composition, for example with cement-mineral composition, forming a composite structure.

Patent PL171919B1 discloses a roof support of a mining excavation, in particular for coal mining, comprising a stack consisting of wooden beams arranged in layers, wherein the beams of one layer of the stack are arranged perpendicular to the beams of its adjacent layer, and with a bag filled with cement mortar arranged on one side of the stack. The presented system comprises a core mounted on one side of the stack and consisting of wooden elements, the greater part of which is arranged with the fibers in the vertical direction, the core having the rigidity in the vertical direction greater than the rigidity of the stack in the vertical direction, while the bag comprises cement mortar in an amount which exerts a desired stress between the stack with the core and the roof of the excavation.

Polish utility model PL67807Y1 discloses a structural element, particularly a sheet metal section for use in sheet metal structures. The structural element has inner walls with longitudinal edges, which are bent inwards, preferably in the center of the base. The inner walls are folded and deviate from each other with their edge walls, preferably at perpendicular to the side walls. Preferably, the edges are in the vicinity of the side wall surfaces. In the transition curve from the base plane, the inner walls are additionally joined with point welds.

EP 2 110 189 A1 discloses a multichamber structural element with the features of the preamble of the appended claim 11 and a method of manufacturing such a multichamber structural element by blow-forming chambers obtained by welding sheet metal walls together.

The technical problem of the present invention is to provide such a multichamber structural element manufacturing method which will allow the manufacturing of a multichamber structural element having desired properties, in particular with respect to the strength and to the load-bearing capacity to weight ratio, for use as a support post, while maintaining a desired dimensional accuracy. It is desirable that the multichamber structural element manufacturing method has a limited number of technological steps and is realized without the use of specialist and complicated apparatus, so as to directly provide economic benefits of a simplified, less time-consuming and thus cheaper manufacturing process of a multichamber structural element. It is also desirable that the multichamber structural element manufacturing method is characterized by low material-consumption and allows the manufacturing of a multichamber structural element having a wide range of geometrical parameters, in particular different heights, spatial forms and both symmetrical and asymmetrical characteristics. It is also important to provide a multichamber structural element manufacturing method which would allow the shape of the multichamber structural element to be easily modified within a wide range of geometrical parameters and without the need to rearrange the apparatus used in the manufacturing process. Importantly, it is also desirable to provide a multichamber structural element which will be easy to transport and install at the destination point. Another technical problem of the present invention is also to offer a multichamber structural element having the above-listed characteristics and desired technical parameters.

The first object of the invention is a multichamber structural element manufacturing method according to the appended claim 1.

In a preferred embodiment of the invention, the chamber profile preform is made of a single sheet of metal material bent along one edge for forming two walls arranged with respect to each other in substantially parallel planes.

In another preferred embodiment of the invention, step c) is performed after the chamber profile preform is introduced between pressure plates in such a manner that the pressure plates are in contact with the walls of the chamber profile preforms.

In another preferred embodiment of the invention, during step c) a force is applied to the pressure plates in the direction of the chamber profile preform.

Preferably, step c) is performed by connecting the valve element to a source of fluid under pressure.

It is equally preferred for step c) to be performed simultaneously for all of the chamber profile preforms corresponding to the chamber profiles in the multichamber structural element.

More preferably, in step d) the chamber profiles are connected while preserving their symmetrical arrangement with respect to the connection axis.

In a preferred embodiment of the invention, step b) is realized by fusion welding, pressure welding, gluing or crimping and/or step d) is realized by fusion welding or pressure welding.

In another preferred embodiment of the invention, the fluid is air, water, oil, fluid concrete or fluid plastic.

In a further preferred embodiment of the invention, step c) is performed in a room temperature or in an elevated temperature.

Preferably, the pressure of the fluid introduced into the chamber profile preform is 5 bars.

Equally preferably, in step c) a fluid under pressure is introduced into the inner space of the chamber profile preform for 1 minute, and subsequently a constant pressure is maintained in the chamber profile preform for 30 seconds.

In a preferred embodiment of the invention, steps b) and d) are realized simultaneously.

In another preferred embodiment of the invention, the simultaneous sealing and connecting of the at least three chamber profile preforms in the area of the corresponding inner edges of the chamber profile preform, proximal with respect to the connection axis, along at least part of the inner edges, is realized by laser welding.

The second object of the invention is a multichamber structural element according to the appended claim 11.

In a preferred embodiment of the invention, the chamber profiles are arranged axially symmetrically with respect to the connection axis.

In a further preferred embodiment of the invention, the chamber profile has an inner edge directed towards the connection axis of the multichamber structural element and extending in a straight line or at least partially in a curved line.

In another preferred embodiment of the invention, the chamber profile has an outer edge, opposite with respect to the connection axis of the multichamber structural element and extending in a straight line parallel to the connection axis, in a deviation from the connection axis, in a concave curved line with respect to the connection axis or in a convex curved line with respect to the connection axis.

Advantageously, the chamber profiles extend at a different radial length with respect to the connection axis.

Also advantageously, the fluid is air, water, oil, fluid concrete or fluid plastic.

The multichamber structural element manufacturing method according to the invention allows the manufacturing of the structural element having desired properties, in particular with respect to the strength and the stiffness coefficient of the structural element and to the load-bearing capacity to weight ratio. In particular, owing to the extensive use of a relatively thin metal sheet in the manufacturing of the multichamber structural element, the multichamber structural element manufactured with the method according to the invention allows a significantly increased load-bearing capacity to weight ratio in comparison to classic solutions known in the art. Furthermore, the multichamber structural element manufacturing method according to the invention is realized with the use of uncomplicated machinery park, which translates into economic benefits and a significantly simplified manufacturing process of the multichamber structural element. A small number of seals improves the speed and lowers the labor-intensity of the multichamber structural element manufacturing process. In addition, the manufacturing of the chamber profile, which is the basic element of the multichamber structural element, based on introducing fluid under pressure into the hermetically closed, inner space of the chamber profile preform allows the parameters of the manufactured chamber profile, and thus of the final multichamber structural element, to be modified within a wide range, in particular with respect to its final geometry. Importantly, owing to the use of relatively thin chamber profile preforms manufactured of a sheet of metal material, and owing to the use of uncomplicated machinery park, the multichamber structural element allows the components to be easily introduced into hard-to-reach locations, e.g. into mining excavations, in which it can be manufactured and erected in simple operations, forming a load-bearing element for roof structures.

The solution according to the present invention has been shown in the embodiments below and illustrated in the drawing, in which:
Fig. 1A-B shows the steps of the multichamber structural element manufacturing method according to one embodiment of the invention,
Fig. 2A-B shows the steps of the multichamber structural element manufacturing method according to a further embodiment of the invention,
Fig. 3A-B shows the steps of the multichamber structural element manufacturing method according to a further embodiment of the invention,
Fig. 4A-B shows the steps of the multichamber structural element manufacturing method according to a further embodiment of the invention,
Fig. 5A-C shows the steps of the multichamber structural element manufacturing method according to a further embodiment of the invention,
Fig. 6A-E shows the cross-sections of the multichamber structural element according to different embodiments of the invention,
Fig. 7A-F shows the front views of the chamber profiles for use in the multichamber structural element according to different embodiments of the invention,
Fig. 8A-E shows the front views of the multichamber structural element according to different embodiments of the invention,
Fig. 9A-E shows the cross-sections of the multichamber structural element along the intersection planes indicated in Figs. 8A-E, respectively,
Fig. 10A-C shows the front views of the multichamber structural element according to different embodiments of the invention,
Fig. 11A-C shows the cross-sections of the multichamber structural element along the intersection planes indicated in Figs. 10A-C, respectively.

### Embodiment 1

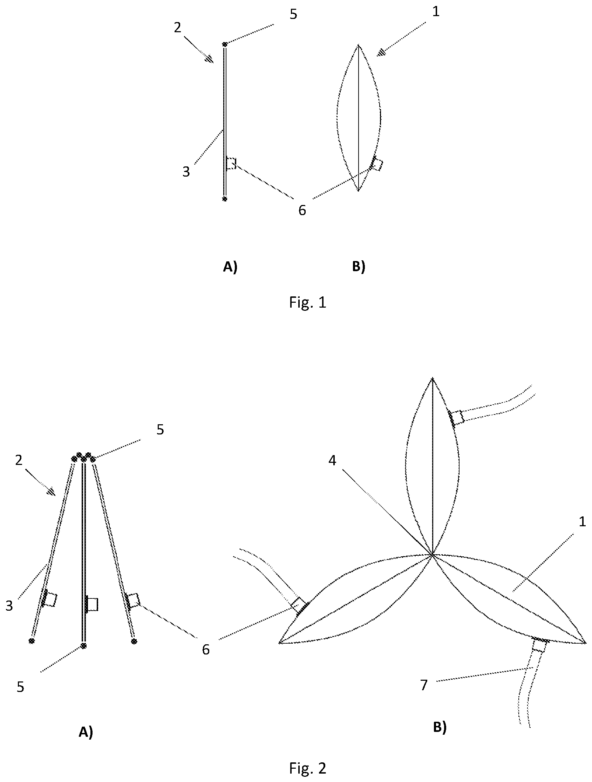

The multichamber structural element manufacturing method according to one embodiment of the invention is partially schematically shown in Fig. 1A-B. The presented embodiment of the multichamber structural element manufacturing method comprises the step of providing a chamber profile preform 2, which comprises two walls 3 made of metal sheet and arranged with respect to each other in substantially parallel planes with a gap retained between them, wherein the edges of the individual walls 3 converge. A valve element 6 is arranged on at least one of the walls 3. The valve element 6 is a pneumatic or hydraulic connection and allows a leakproof fastening of a supply duct 7 from an external source of pressurized fluid. In some embodiments of the invention, the valve element 6 may be a valve, particularly a non-return valve. The location of the valve element 6 is not a limitation to the scope of the present invention, and thus the valve element 6 may be arranged in any location on the metal sheet, on condition that a connection with the inner space of the chamber profile preform 2 is allowed.

In this embodiment, the chamber profile preform 2 is formed of two walls 3, each of the walls 3 being made of a separate metal sheet. In alternative embodiments, it is possible to provide a single sheet of metal material, which is bent, using the cold-bending operations known in the art, along one edge for forming two walls 3 arranged with respect to each other in substantially parallel planes. This embodiment is advantageous in that one edge of the manufactured chamber profile preform 2 is sealed (in the location where the metal sheet is bent) already at the step of providing the metal sheet, thus reducing the number of successive sealing operations.

In the next step of the multichamber structural element manufacturing method, the chamber profile preform 2 is sealed for creating a sealed hermetic inner space. The sealing is performed on the edges of the metal sheet forming the walls 3 of the chamber profile preform 2 after they have been matched with each other. In this embodiment, the sealing is thus performed on all the circumferential edges of the matched walls 3 of the chamber profile preform 2, wherein Fig. 1A shows only the longitudinal seals 5. In this embodiment, the sealing was performed by means of welding the corresponding edges together, forming inter alia longitudinal welds. The sealing is moreover performed on the edges of the matched walls 3, located on the front and on the back of the chamber profile preform 2. By sealing all of the above-listed edges, a leakproof hermetic inner space is formed in the chamber profile preform 2, as schematically shown in the cross-section of Fig. 1A. The type of seal 5 is in this case not a limitation to the scope of the invention, and it is possible in alternative embodiments to use any type of seal 5, on condition that a leakproof inner space is formed in the chamber profile preform 2, by means for example of pressure welding, soldering, gluing, bending or pressing.

In the next step, an external source of fluid under pressure is connected to the valve element 6 through the supply duct 7. In this embodiment, the fluid is air, the source of fluid under pressure is a compressor, and the supply duct 7 together with the valve element 6 form a pneumatic connection. The type of the external source of fluid under pressure and of the connection equipment is not a limitation to the scope of this invention and in alternative embodiments it is possible to use fluid in the form of water, fluid cement, machine oil, fluid plastic such as a one-, two- or three-component foam (e.g. a flex 140 type), etc. together with the connection equipment and the source of fluid under pressure appropriate for those fluids. The less compressible the fluid is, the more controlled the deformation conditions of the chamber profile preform 2 are.

In the next step of the multichamber structural element manufacturing method according to the invention, fluid under a defined pressure is delivered to the sealed inner space of the chamber profile preform 2. The technology of introducing fluid under pressure into closed sealed chamber elements made of sheet metal for their deformation and providing them with the final form is known inter alia from patent application No. EP2110189A1. As a result of delivering fluid under pressure into the inner space of the chamber profile preform 2, the walls 3 of the chamber profile preform 2 are deformed, with the greatest deformation level being located in the center of the chamber profile 1, as best illustrated in Fig. 1B, which shows the cross-section of the chamber profile 1 manufactured from the chamber profile preform 2. As can be observed, the walls 3 of the chamber profile preform 2 are significantly deformed. The next two chamber profiles 1 are manufactured by the same method in order to obtain three chamber profiles 1.

Note should be taken that although the introduction of fluid under pressure into the inner space of the chamber profile preform 2 is performed in cold technology (i.e. in room temperature), it is not a limitation to the scope of this invention, and in alternative embodiments the process may be performed in elevated or high temperatures.

In one embodiment of the invention, the step of introducing fluid under pressure was performed with the following process parameters:
- process temperature: 20 °C,
- working pressure: 5 bars,
- deformation time: 1 minute until pressure is equalized in the chamber profile preform,
- pressure hold time: 30 seconds,
- total deformation time: 1.5 minute.

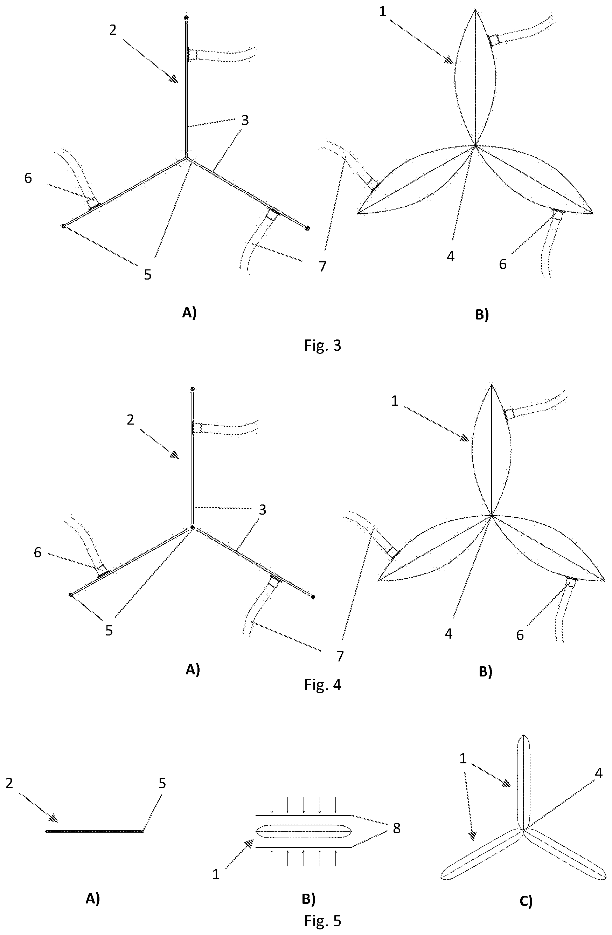

In an alternative implementation of the multichamber structural element manufacturing method, the step of introducing fluid under pressure into the inner space of the chamber profile preform 2 may be preceded by placing the chamber profile preform 2 between the pressure plates 8 so that the pressure plates 8 are in contact with the walls 3 of the chamber profile preform 2, as illustrated in Fig. 5B. The pressure plates 8 may be the working elements of a mechanical press. In this case, a controlled force may be applied to the pressure plates 8, particularly in the direction towards the chamber profile preform 2. In the step of delivering fluid under pressure into the sealed inner space of the chamber profile preform 2, the chamber profile preform 2 is kept between the pressure plates 8. As a result, the chamber profiles 1 formed following this method have flattened surfaces in the central area of the walls 3, as best illustrated in the cross-section of the multichamber structural element shown in Fig. 5C.

In the subsequent step, the three chamber profiles 1 are connected with each other by connecting the corresponding inner edges of the chamber profile 1, proximal with respect to the connection axis 4, along at least part of the inner edges. In this embodiment, it is realized by connecting the corresponding seals 5. The connection area of the chamber profiles 1 includes three edges (seals 5) of the chamber profiles 1 which, together with the connecting weld, form the connection axis 4.

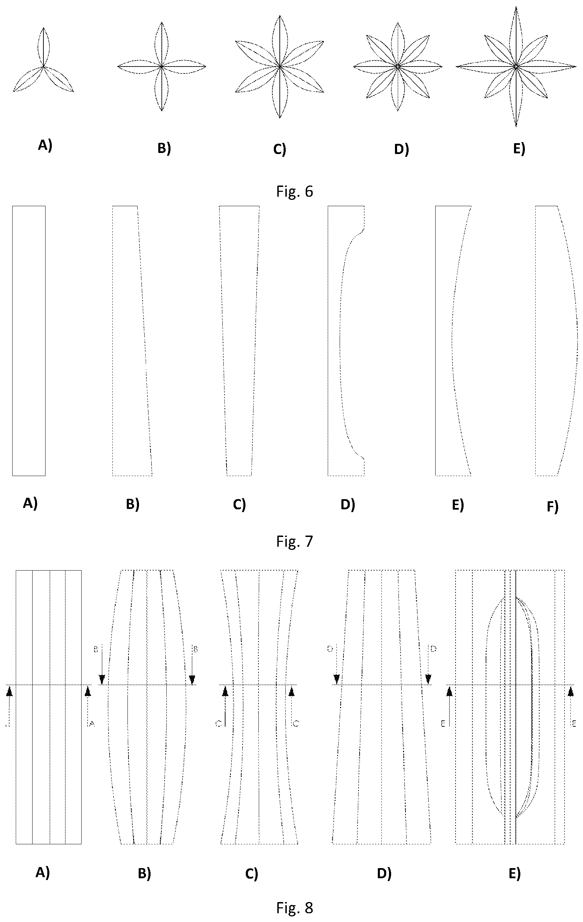

The connection of the chamber profiles 1 is realized in an axially symmetrical arrangement of the chamber profiles 1 with respect to the connection axis 4, i.e. in the cross-sectional view, as shown in Fig. 6A, each of the chamber profiles 1 extends in a radial direction outwards from the connection axis 4, wherein the chamber profiles 1 are arranged around the connection axis 4 by an equal angle, in this embodiment by an angle of 120°.

### Embodiment 2

The multichamber structural element manufacturing method according to the second embodiment of the invention is schematically shown in Fig. 2A-B. The presented embodiment of the multichamber structural element manufacturing method is substantially similar to the multichamber structural element manufacturing method shown in embodiment 1, and therefore the similar steps will not be discussed in detail for the clarity of this disclosure.

In the second embodiment of the multichamber structural element manufacturing method, in the first step two metal sheets are provided which are two walls 3 of the chamber profile preform 2. The walls 3 of the chamber profile preform 2, which are matched with each other, are subsequently sealed on the free edges for forming a sealed hermetic inner space. Following this method, three chamber profile preforms 2 are manufactured.

Unlike in the structural element manufacturing method shown in embodiment 1, the structural element manufacturing method according to the second embodiment comprises the connecting with each other of the thus formed chamber profile preforms 2 by connecting the corresponding seals 5, along the at least part of the seal 5 (as shown in Fig. 2A). The connection area of the chamber profile preforms 2 includes three edges (seals 5) of the chamber profile preforms 2, which form, together with the connecting weld, the connection axis 4 in the final multichamber structural element. In this embodiment, the chamber profile preforms 2 are connected with each other by welding, and the connected chamber profile preforms 2 are shown in Fig. 2A.

In the subsequent step of the multichamber structural element manufacturing method according to the second embodiment of the invention, fluid under a defined pressure is delivered to the sealed inner space of the chamber profile preform 2, wherein this delivery is realized by connecting an external source of fluid under pressure to the valve element 6 through a supply duct 7 (see Fig. 2B). The introduction of fluid under pressure into the inner space of the chamber profile preform 2 may be realized separately for each chamber profile preform 2 as an operation in series (i.e. one after another) or simultaneously for all chamber profile preforms 2, as shown in Fig. 2B. The simultaneous introduction of fluid under pressure into the inner space of the chamber profile preform 2 requires, however, the use of a greater number of supply ducts 7 and an appropriate source of fluid under pressure ensuring the possibility to simultaneously connect the same number of supply ducts 7.

As a result, there is obtained a multichamber structural element, with a cross-section shown in Fig. 6A, having three chamber profiles 1 extending radially and symmetrically arranged with respect to the connection axis 4, deformed by fluid under pressure introduced into their hermetic, sealed inner space.

### Embodiment 3

The multichamber structural element manufacturing method according to the next embodiment of the invention is schematically shown in Fig. 3A-B. The presented embodiment of the multichamber structural element manufacturing method is substantially similar to the multichamber structural element manufacturing method shown in embodiment 2, and therefore the similar steps will not be discussed in detail for the clarity of this disclosure.

In the third embodiment of the multichamber structural element manufacturing method, in the first step there are provided three metal sheets which are V-shaped profiles and which each form one wall 3 of the adjacent chamber profile preforms 2. The V-shaped profiles are matched with each other in such a manner that the arms of the V-shaped profiles extend in planes parallel to the arms of the adjacent V-shaped profiles and form three chamber profile preforms 2, respectively. Subsequently, the sealing step is performed on the free edges (outer edges) of the so-formed chamber profile preforms 2 for forming a sealed hermetic inner space. In the next step (or simultaneously), seals 5 are made within the central area of the connected chamber profile preforms 2. The step of sealing the inner edges of the chamber profile preforms 2 is realized using a sealing technique through the gap maintained between the corresponding walls 3 of the chamber profile preform 2, forming the seal 5 hermetically closing the inner space of the chamber profile preform 2. In this case, the sealing technique preferably comprises laser welding, which allows the walls 3 of the chamber profile preform 2 to be connected with each other by forming a welding seam (weld) through the gap and sealing the space formed between the walls 3 of the chamber profile preform 2. Following this method, three chamber profile preforms 2 are manufactured simultaneously, as shown in Fig. 3A.

In the subsequent step of the multichamber structural element manufacturing method according to the third embodiment of the invention, fluid under a defined pressure is delivered to the sealed inner space of the chamber profile preform 2, wherein this delivery is realized by connecting an external source of fluid under pressure to the valve element 6 through a supply duct 7 (see Fig. 3B). The introduction of fluid under pressure into the inner space of the chamber profile preform 2 is realized simultaneously for all chamber profile preforms 2, as shown in Fig. 3B.

As a result, there is obtained a multichamber structural element, with a cross-section shown in Fig. 6A, having three chamber profiles 1 extending radially and symmetrically arranged with respect to the connection axis 4, deformed by fluid under pressure introduced into their hermetic, sealed inner space.

### Embodiment 4

The multichamber structural element manufacturing method according to the next embodiment of the invention is schematically shown in Fig. 4A-B. The presented embodiment of the multichamber structural element manufacturing method is substantially similar to the multichamber structural element manufacturing method shown in embodiment 2, and therefore the similar steps will not be discussed in detail for the clarity of this disclosure.

In the fourth embodiment of the multichamber structural element manufacturing method, in the first step there are six metal sheets provided and matched correspondingly for forming the chamber profile preforms 2. Each of the chamber profile preforms 2 is sealed on its outer edges, analogically to the previous embodiments. Unlike in the previous embodiments, the inner edges of the chamber profile preforms 2 remain unsealed and in the subsequent step they are positioned with respect to each other by matching the corresponding chamber profile preforms 2 with the inner edges towards each other. The matched inner edges of the chamber profile preforms 2 are subsequently sealed and connected with each other in one operation for forming the connection axis 4 and the sealed, hermetic closure of the inner spaces of all chamber profile preforms 2, as shown in Fig. 4A.

In the subsequent step of the multichamber structural element manufacturing method according to the fourth embodiment of the invention, fluid under a defined pressure is delivered to the sealed inner space of the chamber profile preform 2, wherein this delivery is realized by connecting an external source of fluid under pressure to the valve element 6 through a supply duct 7 (see Fig. 4B).

The introduction of fluid under pressure into the inner space of the chamber profile preform 2 is realized simultaneously for all chamber profile preforms 2, as shown in Fig. 4 B.

As a result, there is obtained a multichamber structural element, with a cross-section shown in Fig. 6A, having three chamber profiles 1 extending radially and symmetrically arranged with respect to the connection axis 4, deformed by fluid under pressure introduced into their hermetic, sealed inner space.

### Embodiment 5

Further non-limiting embodiments of the multichamber structural element are shown in the cross-section in Fig. 4A-E.

Unlike in the multichamber structural element described in embodiments 1 - 4, which was a structural element formed from three chamber profiles 1, as shown in Fig. 6A, other embodiments of the multichamber structural element may comprise a greater number of the component chamber profiles 1. The multichamber structural element may comprise four chamber profiles 1 (Fig. 6B), six chamber profiles 1 (Fig. 6C), and/or eight chamber profiles 1 (Fig 6D). Importantly, the multichamber structural element is not limited to a multichamber structural element formed from geometrically identical chamber profiles 1, and it is possible to have chamber profiles 1 of different geometries within the same multichamber structural element. Such an embodiment is shown in Fig. 6E, in which four chamber profiles 1 extending radially from and symmetrically with respect to the connection axis 4 have a first length, and the remaining four chamber profiles 1 arranged between the first four chamber profiles 1 have a second length greater than the first length. This embodiment illustrates the freedom range in designing the multichamber structural element which allows the technical parameters of the multichamber structural element to be adjusted to the particular arrow of force characteristic of a particular solution.

Various embodiments of multichamber structural elements according to the present invention comprise multichamber structural elements formed from chamber profiles 1 of different geometries. The geometry of the chamber profiles 1 is strictly related to the geometry of the chamber profile preform 2, which is subjected to deformation due to the introduction of fluid under pressure into the hermetic, sealed inner space of the chamber profile preform 2. The large surfaces of the walls 3 of the chamber profile preform 2 are subjected to the most extensive deformation, with a limited or no deformation level in the area of the seals 5. This means that the geometry of the chamber profiles 1 within the seals 5 is substantially identical to the geometry of the chamber profile preforms 2 which allows the free shaping of the final shape of the chamber profile 1, and thus also of the multichamber structural element. Fig. 7A-F is a side view of various geometries of the chamber profile preform 2 which is used in the manufacturing of the chamber profiles 1 being in further steps the components of the multichamber structural element.

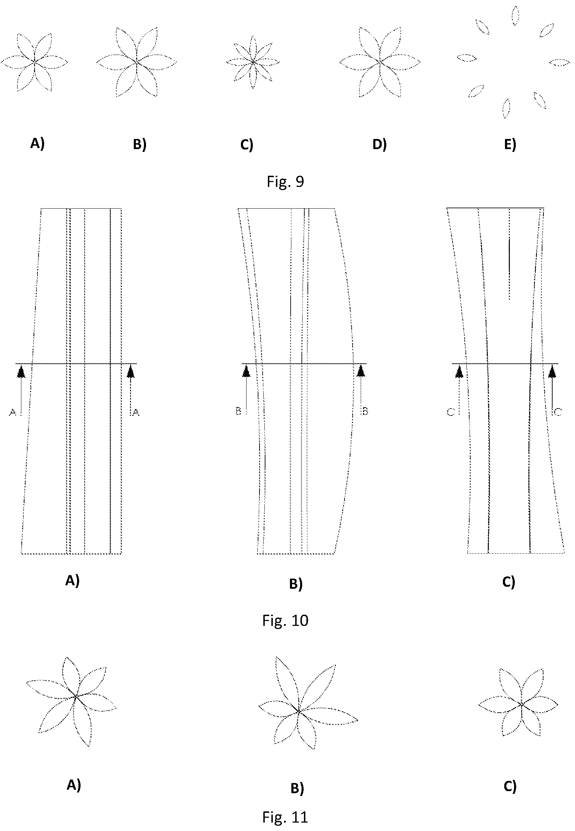

In Fig. 7A, the chamber profile preform 2, and thus the chamber profile 1, has an inner edge which is directed towards the connection axis 4 of the multichamber structural element and which extends in a straight line and parallel to the connection axis 4, and an outer edge, opposite with respect to the connection axis 4 of the multichamber structural element, which extends in a straight line parallel to the connection axis 4. The multichamber structural element manufactured from the chamber profiles 1 presented in Fig. 7A is shown in a side view in Fig. 8A and in a cross-sectional view in Fig. 9A.

In Fig. 7B, the chamber profile preform 2, and thus the chamber profile 1, has an inner edge which is directed towards the connection axis 4 of the multichamber structural element and which extends in a straight line and parallel to the connection axis 4, and an outer edge, opposite with respect to the connection axis 4 of the multichamber structural element, which extends in a straight line sloping with respect to the connection axis 4, wherein the width of the chamber profile 1 increases towards the bottom. The multichamber structural element manufactured from the chamber profiles 1 presented in Fig. 7B is shown in a side view in Fig. 8D and in a cross-sectional view in Fig. 9D.

In Fig. 7C, the chamber profile preform 2, and thus the chamber profile 1, has an inner edge which is directed towards the connection axis 4 of the multichamber structural element and which extends in a straight line and parallel to the connection axis 4, and an outer edge, opposite with respect to the connection axis 4 of the multichamber structural element, which extends in a straight line sloping with respect to the connection axis 4, wherein the width of the chamber profile 1 decreases towards the bottom.

In Fig. 7D, the chamber profile preform 2, and thus the chamber profile 1, has an inner edge which is directed towards the connection axis 4 of the multichamber structural element and which extends in a curved line, with an upper region and a lower region extending in a straight line parallel to the connection axis 4, and an outer edge, opposite with respect to the connection axis 4 of the multichamber structural element, which extends in a straight line parallel to the connection axis 4. The multichamber structural element formed from the chamber profiles 1 presented in Fig. 7D is shown in a side view in Fig. 8E and in a cross-sectional view in Fig. 9E.

In Fig. 7E, the chamber profile preform 2, and thus the chamber profile 1, has an inner edge which is directed towards the connection axis 4 of the multichamber structural element and which extends in a straight line and parallel to the connection axis 4, and an outer edge, opposite with respect to the connection axis 4 of the multichamber structural element, which extends in a concave curved line. The multichamber structural element formed from the chamber profiles 1 presented in Fig. 7E is shown in a side view in Fig. 8C and in a cross-sectional view in Fig. 9C.

In Fig. 7F, the chamber profile preform 2, and thus the chamber profile 1, has an inner edge which is directed towards the connection axis 4 of the multichamber structural element and which extends in a straight line and parallel to the connection axis 4, and an outer edge, opposite with respect to the connection axis 4 of the multichamber structural element, which extends in a convex curved line. The multichamber structural element formed from the chamber profiles 1 presented in Fig. 7F is shown in a side view in Fig. 8B and in a cross-sectional view in Fig. 9B.

In other embodiments, the multichamber structural element may be formed of chamber profiles 1 having different geometries, forming an axially asymmetrical multichamber structural element. Non-limiting embodiment of the axially asymmetrical multichamber structural element are shown in a side view in Fig. 10A and in a cross-sectional view in Fig. 11A, in which the multichamber structural element is manufactured using the chamber profiles 1 presented in Fig. 7A and in Fig. 7B. Another embodiment of the axially asymmetrical multichamber structural element is shown in a side view in Fig. 10B and in a cross-sectional view in Fig. 11B, in which the multichamber structural element is manufactured using the chamber profiles 1 presented in Fig. 7A and in Fig. 7F, and the chamber profile 1 whose outer edge is in the shape of a curve extending from the upper part of the multichamber structural element and gently passing into a straight-line fragment in the lower portion of the multichamber structural element. Yet another embodiment of the axially asymmetrical multichamber structural element is shown in a side view in Fig. 10C and in a cross-sectional view in Fig. 11C, in which the multichamber structural element is manufactured using the chamber profiles 1 presented in Fig. 5A and in Fig. 5E, and the chamber profile 1 whose outer edge is in the shape of a curve extending from the lower part of the multichamber structural element and gently passing into a straight-line fragment in the upper portion of the multichamber structural element.

Importantly, the number of the chamber profiles 1 being part of the multichamber structural element, as well as the geometry of the chamber profile 1 being part of the multichamber structural element are not limited to the scope presented in these embodiments, which are only examples of the possible implementations of the invention. In alternative embodiments, the multichamber structural element may comprise more than three chamber profiles 1, and the chamber profiles 1 may have a shape different than the shapes presented, including a shape being a combination of the shapes here disclosed.

### Embodiment 6

The multichamber structural element manufactured with the method according to the invention were subjected to comparative tests (based on numerical calculations) with a standard structural element commonly used in the art. The results of the comparative tests are presented in Table 1. The tested multichamber structural element manufactured with the method of the invention was designated in Table 1 as FIDU200. The compared structural element, designated as HEB120 is a standardized wide-flange I-profile with the flange width of 120 mm and the profile height of 120 mm, and with the web thickness of 6.5 mm. The material used in the simulations for the HEB120 profile was steel S235JR. The multichamber structural element of the present invention was formed of four chamber profiles 1 illustrated in Fig. 7A and is shown in the cross-sectional view in Fig. 6B. Each component chamber profile 1 had a width, i.e. a radial dimension with respect to the connection axis 4, of 200 mm and was formed of sheet steel S235JR 2 mm in thickness by using process parameters shown in embodiment 1.

**Table 1- technical parameters of the structural elements**

| | FIDU200 | HEB120 |
|---|---|---|
| Moment of inertia, I [mm⁴] | 23835309 | 3180000 |
| Cross-sectional area [mm²] | 3371.5 | 3400 |
| Radius of gyration, i [mm] | 84.1 | 30.6 |
| Length of the element, l [mm] | 2000 | 2000 |
| Mass of 1 meter, m [kg] | 25.2 | 26.7 |
| Buckling force, Fe [N] | 3084462 | 411515 |
| Stress at buckling, σₑ [N/mm²] | 915 | 121 |
| Material yield force, F [N] | 792302.5 | 799000 |

As can be observed in Table 1, the cross-sectional area of the FIDU200 element is smaller by approximately 0.8% than the cross-sectional area of the HEB120 profile. Furthermore, the FIDU200 element is lighter than the HEB120 by approximately 5.9%, with the minimum geometric moment of inertia of the FIDU200 cross-section is approximately 7.5-fold greater than the HEB120. As a result, the FIDU200 element is characterized by an approximately 7.5-fold greater buckling force and by approximately 0.8% smaller material yield force than the HEB120.

The comparison of these parameters demonstrates that the cross-section of the multichamber structural element according to this invention (FIDU200) is used better than in the standard profile, commonly applied in the art (HEB120). Furthermore, with lower mass and smaller cross-sectional area, the multichamber structural element according to this invention reaches 7.5-fold greater moment of inertia and 7.5-fold greater buckling strength.

List of reference numerals:
- 1 -: chamber profile
- 2 -: chamber profile preform
- 3 -: wall of the chamber profile preform
- 4 -: connection axis
- 5 -: seal
- 6 -: valve element
- 7 -: supply duct
- 8 -: pressure plate

## Claims

1. A multichamber structural element manufacturing method **characterized in that** it comprises the following steps:
**a)** at least three chamber profile preforms (2) are provided, wherein each chamber profile preform (2) comprises two walls (3) made of a sheet of metal material and arranged with respect to each other in substantially parallel planes with a gap retained between them, wherein the edges of the individual walls (3) converge, and wherein a valve element (6) is arranged on at least one wall (3), and wherein each chamber profile preform (2) has an inner edge and an outer edge,
**b)** the unconnected wall (3) edges of each of the chamber profile preforms (2) are sealed with a seal (5) for forming a closed hermetic empty inner space of the chamber profile preform (2),
**c)** a fluid under pressure is introduced through the valve element (6) into the inner space of the chamber profile preform (2) for forming a deformed chamber profile (1),
**d)** at least three chamber profile preforms (2) or chamber profiles (1) are connected in an area of the corresponding inner edges of the chamber profile preform (2) or the chamber profile (1), proximal with respect to a connection axis (4), along at least part of the inner edges, wherein the connection axis (4) is formed by the inner edges being connected together with a connecting weld,
wherein steps c) and d) may be performed in reverse sequence.

2. The multichamber structural element manufacturing method according to claim 1, **characterized in that** the chamber profile preform (2) is made of a single sheet of metal material bent along one edge for forming two walls (3) arranged with respect to each other in substantially parallel planes.

3. The multichamber structural element manufacturing method according to any of claims 1 or 2, **characterized in that** step c) is performed after the chamber profile preform (2) is introduced between pressure plates (8) in such a manner that the pressure plates (8) are in contact with the walls (3) of the chamber profile preforms (2).

4. The multichamber structural element manufacturing method according to claim 3, **characterized in that** during step c) a force is applied to the pressure plates (8) in a direction of the chamber profile preform (2).

5. The multichamber structural element manufacturing method according to any of claims 1 - 4, **characterized in that** step c) is performed simultaneously for all of the chamber profile preforms (2) corresponding to the chamber profiles (1) in the multichamber structural element.

6. The multichamber structural element manufacturing method according to any of claims 1-5, **characterized in that** in step d) the chamber profiles (1) are connected while preserving their symmetrical arrangement with respect to the connection axis (4).

7. The multichamber structural element manufacturing method according to any of claims 1- 6, **characterized in that** step b)is realized by fusion welding, pressure welding, gluing or crimping and/or step d) is realized by fusion welding or pressure welding.

8. The multichamber structural element manufacturing method according to any of claims 1 - 7, **characterized in that** the fluid is air, water, oil, fluid concrete or fluid plastic.

9. The multichamber structural element manufacturing method according to any of claims 1-8, **characterized in that** steps b) and d) are realized simultaneously.

10. The multichamber structural element manufacturing method according to claim 9, **characterized in that** the simultaneous sealing and connecting of the at least three chamber profile preforms (2) in the area of the corresponding inner edges of the chamber profile preform (2), proximal with respect to the connection axis (4), along at least part of the inner edges, is realized by laser welding.

11. A multichamber structural element comprising at least three chamber profiles (1) wherein each chamber profile (1) comprises two walls (3) made of a sheet of metal material with a valve element (6) arranged on at least one wall (3),
wherein the edges of the metal sheet forming the walls (3) are sealed with a seal (5) creating a sealed hermetic inner space of the chamber profile (1), wherein opposite two walls (3) are deformed due to the introduction of fluid under pressure into the sealed hermetic inner space, wherein each the chamber profile (1) has an inner edge and an outer edge, wherein the at least three chamber profiles (1) are connected with each other with corresponding seals (5) along at least a part of the seal (5),
**characterized in that**
the chamber profiles (1) extend radially from the center defined by a connection axis (4), wherein the connection axis (4) is formed by the inner edges being connected together with a connecting weld.

12. The multichamber structural element according to claim 11, **characterized in that** the chamber profiles (1) are arranged axially symmetrically with respect to the connection axis (4).

13. The multichamber structural element according to any of claims 11 or 12, **characterized in that** at least one chamber profile (1) has an inner edge directed towards the connection axis (4) of the multichamber structural element and extending in a straight line or at least partially in a curved line.

14. The multichamber structural element according to any of claims 11-13, **characterized in that** at least one chamber profile (1) has an outer edge, opposite with respect to the connection axis (4) of the multichamber structural element and extending in a straight line parallel to the connection axis (4), in a deviation from the connection axis (4), in a concave curved line with respect to the connection axis (4) or in a convex curved line with respect to the connection axis (4).

15. The multichamber structural element according to any of claims 11-14, **characterized in that** the chamber profiles (1) extend at a different radial length with respect to the connection axis (4).

## Patentansprüche

1. Verfahren zur Herstellung eines Mehrkammerbauelements, **dadurch gekennzeichnet, dass** es die folgenden Schritte umfasst:
a) mindestens drei Vorformen (2) des Kammerprofils werden bereitgestellt, wobei jede Vorform (2) des Kammerprofils aus zwei Wänden (3) aus einem metallischen Bogenmaterial besteht, die im Wesentlichen in parallelen Ebenen zueinander, mit einem Zwischenraum angeordnet sind, wobei die Kanten der einzelnen Wände (3) miteinander konvergent sind, und wobei an mindestens einer Wand (3) ein Ventilelement (6) angeordnet ist, und wobei jede Vorform (2) des Kammerprofils eine Innen- und eine Außenkante aufweist,
**b)** die nicht miteinander verbundenen Wandkanten (3) jeder Vorform (2) des Kammerprofils mittels einer Dichtung (5) abgedichtet werden, um einen geschlossenen hermetischen Hohlraum innerhalb der Vorform (2) des Kammerprofils zu bilden,
**c)** über das Ventilelement (6) wird in den Innenraum der Vorform (2) des Kammerprofils eine Flüssigkeit unter Druck eingeleitet, um das Kammerprofil (1) zu verformen,
**d)** mindestens drei Vorformen (2) eines Kammerprofils oder Kammerprofile (1) werden im Bereich der entsprechenden Innenkanten der Vorform (2) eines Kammerprofils oder des Kammerprofils (1) proximal zur Verbindungsachse (4) und entlang mindestens eines Teils der Innenkanten miteinander verbunden, wobei die Verbindungsachse (4) von den miteinander geschweißten Innenkanten gebildet wird, wobei die Schritte (c) und (d) in umgekehrter Reihenfolge durchgeführt werden können.

2. Verfahren zur Herstellung eines Mehrkammerbauelements nach Anspruch 1, **dadurch gekennzeichnet, dass** die Vorform (2) des Kammerprofils aus einem einzigen Bogen aus einem metallischen Material besteht, das entlang einer Kante gekantet ist, um zwei Wände (3) zu bilden, die zueinander in im Wesentlichen parallelen Ebenen angeordnet sind.

3. Verfahren zur Herstellung eines Mehrkammerbauelements nach einem der Ansprüche 1 oder 2, **dadurch gekennzeichnet, dass** der Schritt c) nach der Einführung der Vorform (2) des Kammerprofils zwischen die Druckplatten (8) durchgeführt wird, so dass die Druckplatten (8) in Kontakt mit den Wänden (3) der Vorform (2) des Kammerprofils stehen.

4. Verfahren zur Herstellung eines Mehrkammerbauelements nach Anspruch 3, **dadurch gekennzeichnet, dass** eine Kraft auf die Druckplatten (8) in Richtung der Vorform (2) des Kammerprofils während des Schrittes c) angelegt wird.

5. Verfahren zur Herstellung eines Mehrkammerbauelements nach einem der Ansprüche 1 bis 4, **dadurch gekennzeichnet, dass** der Schritt c) gleichzeitig für alle Vorformen (2) des den Kammerprofilen (1) im Mehrkammerbauelement entsprechenden Kammerprofils durchgeführt wird.

6. Verfahren zur Herstellung eines Mehrkammerbauelements nach einem der Ansprüche 1 bis 5, **dadurch gekennzeichnet, dass** im Schritt d) die Kammerprofile (1) miteinander verbunden werden und zwar so, dass ihre symmetrischen Anordnung in Bezug auf die Verbindungsachse (4) beibehalten wird.

7. Verfahren zur Herstellung eines Mehrkammerbauelements nach einem der Ansprüche 1 bis 6, **dadurch gekennzeichnet, dass** der Schritt b) mittels Schweißen, Pressschweißen, Verkleben oder Falzen und/oder der Schritt d) mittels Schweißen oder Pressschweißen ausgeführt wird.

8. Verfahren zur Herstellung eines Mehrkammerbauelements nach einem der Ansprüche 1 bis 7, **dadurch gekennzeichnet, dass** die Flüssigkeit aus Luft, Wasser, Öl, flüssigem Beton oder flüssigem Kunststoff besteht.

9. Verfahren zur Herstellung eines Mehrkammerbauelements nach einem der Ansprüche 1 bis 8, **dadurch gekennzeichnet, dass** die Schritte b) und d) gleichzeitig ausgeführt werden.

10. Verfahren zur Herstellung eines Mehrkammerbauelements nach Anspruch 9, **dadurch gekennzeichnet, dass** das gleichzeitige Abdichten und Zusammenfügen von mindestens drei Vorformen (2) des Kammerprofils im Bereich der entsprechenden Innenkanten der Vorform (2) des Kammerprofils, die zur Verbindungsachse (4) proximal geführt sind, entlang mindestens eines Teils der Innenkanten mittels Laserschweißen erfolgt.

11. Mehrkammerbauelement mit mindestens drei Kammerprofilen (1), wobei jedes Kammerprofil (1) aus zwei Wänden (3) besteht, die aus einem metallischen Bogenmaterial ausgeführt sind, und ein an mindestens einer Wand (3) angeordnetes Ventilelement (6) aufweist, wobei die Ränder des metallischen Bogenmaterials, das die Wände (3) bildet mittels einer Dichtung (5) abgedichtet sind, und so einen dichten, hermetischen Hohlraum im Kammerprofil (1) bilden, wobei die beiden gegenüberliegenden Wände (3) durch die Einleitung einer Flüssigkeit unter Druck in den abgedichteten, hermetischen Hohlraum verformt werden, wobei jedes Kammerprofil (1) einen Innen- und einen Außenrand aufweist, wobei mindestens drei Kammerprofile (1) durch entsprechende Dichtungen (5) entlang mindestens eines Teils der Dichtung (5) miteinander verbunden sind, **dadurch gekennzeichnet, dass** die Kammerprofile (1) sich radial von dem durch die Verbindungsachse (4) definierten Mittelpunkt aus erstrecken, wobei die Verbindungsachse (4) durch die miteinander verschweißten Innenränder gebildet wird.

12. Mehrkammerbauelement nach Anspruch 11, **dadurch gekennzeichnet, dass** die Kammerprofile (1) axial symmetrisch zur Verbindungsachse (4) angeordnet sind.

13. Mehrkammerbauelement nach Anspruch 11 oder 12, **dadurch gekennzeichnet, dass** mindestens ein Kammerprofil (1) eine zur Verbindungsachse (4) des Mehrkammerbauelements gerichtete, gerade oder zumindest teilweise bogenförmig verlaufende Innenkante aufweist.

14. Mehrkammerbauelement nach einem der Ansprüche 11 bis 13, **dadurch gekennzeichnet, dass** mindestens ein Kammerprofil (1) eine Außenachse aufweist, die gegenüber der Verbindungsachse (4) des Mehrkammerbauelements liegt, und geradlinig parallel zur Verbindungsachse (4), abweichend von der Verbindungsachse (4), konkav zur Verbindungsachse (4) oder konvex zur Verbindungsachse (4) verläuft.

15. Mehrkammerbauelement nach einem der Ansprüche 11 bis 14, **dadurch gekennzeichnet, dass** die Kammerprofile (1) sich in unterschiedlichen radialen Längen zur Verbindungsachse (4) erstrecken.

## Revendications

1. Procédé de fabrication d'un élément structurel à chambres multiples, **caractérisé en ce que,** comprend les étapes suivantes :
**a)** au moins trois préformes (2) du profil de la chambre sont fournies, chaque préforme (2) du profil de la chambre comprenant deux parois (3) faites d'une feuille de matériau métallique et disposées l'une par rapport à l'autre dans des plans sensiblement parallèles avec un espace entre elles, bords des différentes parois (3) coïncidant, un élément de valve (6) étant placé sur au moins une paroi (3), et chaque préforme (2) du profil de la chambre ayant un bord intérieur et un bord extérieur,
**b)** les bords des parois non reliées (3) de chacune des préformes (2) du profil de la chambre sont scellés au moyen d'un joint (5) pour former une cavité hermétique fermée à l'intérieur de la préforme (2) du profil de la chambre,
**c)** un fluide sous pression est introduit par l'élément de valve (6) dans l'espace intérieur de la préforme (2) du profil de chambre pour former le profil de chambre déformé (1),
**d)** au moins trois préformes (2) d'un profil de chambre ou de profils de chambre (1) sont assemblées dans la zone des bords intérieurs correspondants de la préforme (2) d'un profil de chambre ou d'un profil de chambre (1), à proximité de l'axe (4) de la connexion, le long d'au moins une partie des bords intérieurs, l'axe (4) de la connexion étant formé par les bords intérieurs reliés l'un à l'autre par une soudure de la connexion,
les étapes c) et d) pouvant être effectuées dans l'ordre inverse.

2. Procédé de fabrication d'un élément structurel à chambres multiples selon la revendication 1, **caractérisé en ce que** la préforme (2) du profil de la chambre est constituée d'une seule feuille de matériau métallique, pliée le long d'un bord pour former deux parois (3) disposées l'une par rapport à l'autre dans des plans sensiblement parallèles.

3. Procédé de fabrication d'un élément structurel à chambres multiples selon l'une quelconque des revendications 1 ou 2, **caractérisé en ce que** l'étape c) est effectuée après avoir inséré la préforme (2) du profil de chambre entre les plaques de pression (8) de sorte que les plaques de pression (8) soient en contact avec les parois (3) de la préforme (2) du profil de chambre.

4. Procédé de fabrication d'un élément structurel à chambres multiples selon la revendication 3, **caractérisé en ce que** pendant l'étape c) une force est appliquée aux plaques de pression (8) en direction de la préforme (2) du profil de la chambre.

5. Procédé de fabrication d'un élément structurel à chambres multiples selon l'une quelconque des revendications 1 à 4, **caractérisé en ce que** l'étape c) est effectuée simultanément pour toutes les préformes (2) du profil de chambre correspondant aux profils de chambre (1) dans l'élément structurel à chambres multiples.

6. Procédé de fabrication d'un élément structurel à chambres multiples selon l'une quelconque des revendications 1 à 5, **caractérisé en ce que** à l'étape d) les profils de chambre (1) sont assemblés tout en conservant une disposition symétrique par rapport à l'axe (4) de la connexion.

7. Procédé de fabrication d'un élément structurel à chambres multiples selon l'une quelconque des revendications 1 à 6, **caractérisé en ce que** l'étape b) est mise en œuvre par soudage, soudage, collage ou sertissage et/ou l'étape d) est mise en œuvre par soudage ou sertissage.

8. Procédé de fabrication d'un élément structurel à chambres multiples selon l'une quelconque des revendications 1 à 7, **caractérisé en ce que** le fluide est de l'air, de l'eau, de l'huile, du béton liquide ou du plastique liquide.

9. Procédé de fabrication d'un élément structurel à chambres multiples selon l'une quelconque des revendications 1 à 8, **caractérisé en ce que** les étapes (b) et (d) sont effectuées simultanément.

10. Procédé de fabrication d'un élément structurel à chambres multiples selon la revendication 9, **caractérisé en ce que** le scellement et l'assemblage simultanés d'au moins trois préformes (2) du profil de la chambre dans la zone des bords intérieurs correspondants de la préforme (2) du profil de la chambre, à proximité de l'axe (4) de la connexion, le long d'au moins une partie des bords intérieurs, sont effectués au moyen d'un soudage au laser.

11. Un élément structurel à chambres multiples comprenant au moins trois profils de chambre (1), chaque profil de chambre (1) comprenant deux parois (3) faites d'une feuille de matériau métallique et un élément de soupape (6) disposé sur au moins une paroi (3), dans lequel les bords de la feuille de matériau métallique formant les parois (3) sont scellés au moyen d'un joint (5) formant un espace intérieur hermétique scellé du profilé de chambre (1), les deux parois opposées (3) étant déformées par un fluide sous pression introduit dans leur espace intérieur hermétique scellé, dans lequel chaque profil de chambre (1) a un bord intérieur et un bord extérieur, dans lequel au moins trois profils de chambre (1) sont reliés les uns aux autres par des joints correspondants (5) le long d'au moins une partie du joint (5), **caractérisé en ce que** les profils de chambre (1) s'étendent radialement à partir du centre défini par l'axe (4) de la connexion, l'axe (4) de la connexion étant formé par les bords intérieurs reliés l'un à l'autre par une soudure de la connexion.

12. Élément structurel à chambres multiples selon la revendication. 11, **caractérisés en ce que** les profils de chambre (1) sont disposés axialement de manière symétrique par rapport à l'axe (4) de la connexion.

13. Élément structurel à chambres multiples selon la revendication. 11 ou 12, **caractérisés en ce que** au moins un profil de chambre (1) présente un bord intérieur, dirigé vers l'axe (4) de la connexion de l'élément à chambres multiples, s'étendant en ligne droite ou au moins partiellement en arc de cercle.

14. Élément structurel à chambres multiples selon l'une quelconque des revendications 11 à 13, **caractérisé en ce que** au moins un profil de chambre (1) a un bord extérieur, opposé à l'axe (4) de la connexion de l'élément structurel à chambres multiples, s'étendant de façon rectiligne parallèlement à l'axe (4) de la connexion, en déviation par rapport à l'axe (4) de la connexion, le long d'un arc concave par rapport à l'axe (4) de la connexion ou le long d'un arc convexe par rapport à l'axe (4) de la connexion.

15. Élément structurel à chambres multiples selon l'une quelconque des revendications 11 à 14, **caractérisés en ce que** les profils de chambre (1) s'étendent à différentes distances radiales par rapport à l'axe (4) de la connexion.
